Europäisches Patentamt

European Patent Office

Office européen des brevets

(19)

(11) **EP 0 880 759 B1**

(12) **FASCICULE DE BREVET EUROPEEN**

(45) Date de publication et mention
de la délivrance du brevet:
**02.11.2005 Bulletin 2005/44**

(51) Int Cl.⁷: **G07F 7/10**, G07C 9/00,
E05B 49/00

(21) Numéro de dépôt: **97905199.2**

(22) Date de dépôt: **13.02.1997**

(86) Numéro de dépôt international:
**PCT/FR1997/000276**

(87) Numéro de publication internationale:
**WO 1997/030424 (21.08.1997 Gazette 1997/36)**

(54) **PROCEDE POUR FAIRE AUTORISER PAR UN SERVEUR L'ACCES A UN SERVICE A PARTIR DE DISPOSITIFS PORTATIFS A MICROCIRCUITS ELECTRONIQUES DU TYPE CARTE A MEMOIRE PAR EXEMPLE**

VERFAHREN UM DEN ZUGANG ZU EINER DIENSTLEISTUNG MIT HILFE TRAGBARER VORRICHTUNGEN MIT ELEKTRONISCHEN SCHALTKREISEN Z.B. SPEICHERKARTEN DURCH EINEN SERVER AUTORISIEREN ZU LASSEN

METHOD FOR SERVER-AUTHORISED SERVICE ACCESS FROM PORTABLE ELECTRONIC MICROCIRCUIT DEVICES SUCH AS SMART CARDS

(84) Etats contractants désignés:
**BE DE ES FR GB IT NL**

(30) Priorité: **15.02.1996 FR 9601872**

(43) Date de publication de la demande:
**02.12.1998 Bulletin 1998/49**

(73) Titulaire: **ELVA SA**
**92100 Boulogne (FR)**

(72) Inventeur: **COLNOT, Cédric**
**F-94200 Ivry-sur-Seine (FR)**

(74) Mandataire: **Doireau, Marc et al**
**Cabinet ORES,**
**36,rue de St Pétersbourg**
**75008 Paris (FR)**

(56) Documents cités:
**EP-A- 0 219 060**      **EP-A- 0 265 728**
**EP-A- 0 372 285**      **EP-A- 0 385 070**
**EP-A- 0 459 781**      **EP-A- 0 605 996**
**DE-A- 4 411 450**

**Description**

La présente invention concerne un procédé pour faire autoriser par un serveur l'accès à un service à partir de dispositifs portatifs à microcircuits électroniques du type carte à mémoire, par exemple.

L'avènement dans les années 1970 du concept de la carte à microcircuits électroniques, couramment dénommée maintenant carte à mémoire ou carte à puce et qui intègre notamment une mémoire non volatile du type EEPROM et un microprocesseur, a permis d'entrevoir de nombreuses applications notamment axées vers le domaine grand public avec l'apparition des publiphones à carte, puis des terminaux bancaires qui mettent à profit les possibilités offertes par le microprocesseur de la carte.

D'une manière générale, la carte peut être utilisée comme une simple clé d'accès à un service, personnalisée ou non et sécurisée ou non, et/ou comme un moyen pour valider un transfert d'informations confidentielles ou non et à distance ou non entre deux cartes, entre une carte et un terminal, ou entre deux terminaux, par exemple.

Dans la plupart des applications envisagées, l'accès à un service ou un transfert d'informations est précédé par l'exécution d'un protocole d'identification du type unidirectionnel ou bidirectionnel qui prend en compte au moins une information spécifique préenregistrée dans la mémoire de la carte.

L'information spécifique prise en compte dans un protocole d'identification peut être un code confidentiel ou "PIN CODE" qui est attribué au porteur de la carte et qui permet au microprocesseur de la carte d'authentifier ledit porteur avant de lui autoriser l'accès au service demandé, comme dans le cas d'une transaction bancaire, par exemple.

L'information spécifique prise en compte dans un protocole d'identification peut être également un code propre au service demandé par le porteur de la carte.

Dans ce cas, le code contenu dans la carte est transmis à distance ou non à un serveur pour identification. Le protocole d'identification est soit unidirectionnel lorsque le serveur autorise l'accès au service demandé à partir de la reconnaissance du seul code transmis par la carte, soit bidirectionnel lorsque le serveur autorise l'accès au service demandé après échange de différents codes calculés séparément dans la carte et dans le serveur, ces codes prenant en compte une clé secrète et/ou des nombres aléatoires par exemple.

Les codes calculés séparément dans la carte et dans le serveur, peuvent être des cryptogrammes, mais chaque cryptogramme transmis par la carte au serveur doit être accompagné d'une information de synchronisation pour permettre au serveur de pouvoir authentifier le cryptogramme émis par la carte. L'information de synchronisation peut être un horodatage, mais cela nécessite une base de temps dans la carte qui doit être synchronisée avec celle du serveur, ou le contenu d'un compteur. De telles solutions sont notamment décrites dans les documents US-A-4,601,011 et EP-A-0 451 056.

Ces solutions ont notamment pour inconvénient d'être complexes et délicates à mettre en oeuvre.

Dans les documents EP-A-0 219 060 et EP-A-0265 728, chaque mot de code émis par un dispositif portatif ne prend en compte des informations qui soient propres à chaque dispositif portatif.

Dans le document EP-A-0 385 070, chaque dispositif portatif est personnalisé par une information fixe CWG et par une information modifiable CWV, mais il émet toujours la même séquence CWG + CWV. Le seul intérêt de l'information CWV est de pouvoir être modifiée en cas de perte ou de vol d'un dispositif portatif.

Le but de l'invention est de concevoir un protocole d'identification qui soit simple et facile à mettre en oeuvre, tout en garantissant un degré de sécurité suffisant pour le mettre à l'abri des fraudeurs, ce protocole d'identification prenant notamment en compte des informations propres à chaque dispositif portatif.

A cet effet, l'invention propose un procédé pour faire autoriser par un serveur l'accès à un service à partir de dispositifs portatifs à microcircuits électroniques du type carte à mémoire par exemple, du type consistant à effectuer des opérations d'initialisation de chaque dispositif portatif et du serveur et, lors d'une demande d'accès d'un utilisateur à partir d'un dispositif portatif, le procédé consiste dans une première étape de synchronisation :

- à faire émettre par le dispositif portatif au moins une première séquence d'identification contenant au moins un cryptogramme ($C_i$) calculé par des circuits de traitement du dispositif portatif et tel que sa valeur est calculée au moins à partir de celle du cryptogramme précédent ($C_{i-1}$),

- à transmettre cette première séquence d'identification au serveur via un terminal,

- à faire calculer par des circuits de traitement du serveur des cryptogrammes successifs ($Q_1$, $Q_2$, ...) à partir du cryptogramme ($Q_o$) mémorisé dans le serveur et dont la valeur est égale à celle du cryptogramme ($C_{i-n}$) qui était contenu dans la dernière séquence d'identification émise par le dispositif portatif et transmise au serveur, jusqu'à retrouver un cryptogramme ($Q_n$) dont la valeur soit égale à celle du cryptogramme ($C_i$) contenu dans la première séquence d'identification, et

- à donner au cryptogramme ($Q_o$) mémorisé dans le serveur une nouvelle valeur égale à celle du cryptogramme ($C_i$), et en ce que le procédé consiste dans une deuxième étape d'authentification, à ne faire valider la demande d'accès par le serveur que si au moins la première étape de synchronisation a été satisfaite,

caractérisé en ce que les cryptogrammes ($C_i$) cal-

culés par les dispositifs portatifs et le serveur sont le résultat d'un algorithme itératif ($A_2$) basé sur une fonction non inversible à clé secrète, et en ce que les cryptogrammes ($C_i$) prennent en compte un numéro d'identification ($N_c$) attribué au dispositif portatif.

Pour renforcer la sécurité du protocole d'identification et selon une autre caractéristique de l'invention, le procédé consiste dans la seconde étape d'authentification et une fois que la première étape de synchronisation a été satisfaite :

- à faire émettre par le dispositif portatif une seconde séquence d'identification contenant au moins le numéro d'identification $N_c$ attribué au dispositif portatif et le cryptogramme $C_{i+1}$ calculé par le dispositif portatif à partir du cryptogramme $C_i$, contenu dans la première séquence d'identification et mémorisé dans le dispositif portatif,
- à transmettre cette seconde séquence d'identification au serveur via le terminal,
- à faire exécuter par le serveur l'algorithme A2 pour calculer le cryptogramme $Q_1$ à partir de la valeur du cryptogramme $Q_0$ mémorisé dans le serveur,
- à faire valider la demande d'accès par le serveur que si les valeurs des deux cryptogrammes $C_{i+1}$ et $Q_1$ sont égales, et
- à donner au cryptogramme $Q_0$ mémorisé dans le serveur une nouvelle valeur égale à celle du cryptogramme $C_{i+1}$.

Le fait que deux séquences d'identification doivent être successivement émises par le dispositif portatif avant que le serveur n'autorise l'accès, permet de renforcer la sécurité vis-à-vis des fraudeurs.

D'une manière générale, le procédé consiste également au cours des étapes de synchronisation et d'authentification :

- à faire calculer et mémoriser par chaque dispositif portatif un nouveau cryptogramme $C_{i+1}$ lorsqu'il émet une séquence d'identification contenant le cryptogramme $C_i$, et
- à faire prendre en compte par les algorithmes A2 de calcul des cryptogrammes des dispositifs portatif et du serveur, une donnée confidentielle $G_c$ également attribuée au dispositif portatif par une personne habilitée.

Ainsi, à chaque demande d'accès au serveur à partir d'un dispositif portatif, le serveur gère un protocole d'identification qui comprend une étape de synchronisation et une étape d'authentification.

Ce protocole d'identification ne peut se dérouler que si chaque dispositif portatif d'une part et le serveur d'autre part, ont été initialisés, c'est-à-dire qu'ils contiennent les informations nécessaires pour pouvoir exécuter le protocole d'identification.

D'une manière générale, l'opération d'initialisation de chaque dispositif portatif consiste à mémoriser dans une mémoire non volatile du type EEPROM du dispositif portatif au moins les informations suivantes :

- un numéro d'identification $N_c$ attribué au dispositif portatif,
- une donnée confidentielle $G_c$ attribuée au dispositif portatif, et
- la valeur d'un cryptogramme initial $C_0$ pour permettre à l'algorithme du dispositif portatif de pouvoir calculer ensuite les cryptogrammes successifs $C_1$, $C_2$,...

Dans cette opération d'initialisation de chaque dispositif portatif, le procédé peut consister à diversifier la donnée confidentielle $G_c$ attribuée à chaque dispositif portatif à partir d'une donnée de base et d'un algorithme A1 correspondant à une fonction F1 à clé secrète $K_s$, cette donnée de base étant par exemple le numéro d'identification $N_c$ attribué à chaque dispositif portatif.

Cette opération d'initialisation des dispositifs portatifs est effectuée par une personne habilitée et avant que les dispositifs portatifs ne soient remis aux utilisateurs. En fonction des applications envisagées, il est bien entendu possible de mémoriser d'autres informations dans chaque dispositif portatif, mais celles concernant le numéro d'identification $N_c$, la donnée confidentielle $G_c$ et la valeur du cryptogramme initial $C_0$ sont nécessaires pour mettre en oeuvre le protocole d'identification selon un mode préférentiel de réalisation et quelle que soit l'application envisagée.

D'une manière générale, l'opération d'initialisation du serveur consiste à faire mémoriser dans le serveur les données propres attribuées à chaque dispositif portatif pour pouvoir mettre en oeuvre les étapes de synchronisation et d'authentification conduisant ou non à l'accès au service demandé par l'utilisateur. Concrètement, on mémorise dans un fichier du serveur et pour chaque dispositif portatif, le numéro d'identification $N_c$, la donnée confidentielle $G_c$ ou la clé secrète $K_s$ qui lui permettra ensuite de calculer cette donnée à chaque utilisation du dispositif portatif, et un cryptogramme $Q_0$ dont la valeur est égale à celle du cryptogramme initial $C_0$ pour pouvoir calculer ensuite les cryptogrammes successifs $Q_1$, $Q_2$, ... sur la même base que celle utilisée par les dispositifs portatifs pour calculer les cryptogrammes successifs $C_1$, $C_2$, ....

L'opération d'initialisation du serveur est également faite par une personne habilitée, qui n'est pas nécessairement la même que celle qui effectue l'opération d'initialisation de chaque dispositif portatif. Suivant les applications envisagées, l'opération d'initialisation du serveur est soit entièrement réalisée avant de remettre le dispositif portatif aux utilisateurs, soit achevée lors du premier accès au serveur alors que les utilisateurs sont déjà en possession des dispositifs portatifs.

Ces opérations d'initialisation des dispositifs portatifs et du serveur seront explicitées en détail par la suite dans des exemples d'application du procédé.

Selon un avantage important de l'invention, le procédé peut être mis en oeuvre dans de nombreuses applications aussi diverses que des applications concernant la banque à domicile, le télépéage et les alarmes de véhicules automobiles, où l'accès à un service à partir d'un dispositif portatif est autorisé ou non en fonction du résultat de l'exécution d'un protocole d'identification piloté par un serveur qui gère le service demandé et qui est connecté à un terminal qui assure l'interface entre le dispositif portatif et le serveur.

Selon un autre avantage de l'invention, la mise en oeuvre du procédé peut être effectuée avec des moyens simples, notamment en ce qui concerne les dispositifs portatifs qui reprennent globalement les caractéristiques connues des cartes à puce, en particulier des cartes équipées d'une interface de sortie vocale ou radiofréquence pour émettre les séquences d'identification transmises au serveur.

D'autres caractéristiques, avantages et détails de l'invention vont être explicités ci-après en faisant référence aux trois applications précitées pour bien mettre en évidence la diversité des applications où l'invention peut présenter de l'intérêt.

Comme cela a été explicité précédemment, le procédé selon l'invention a pour but de faire autoriser par un serveur l'accès à un service à partir de dispositifs portatifs à microcircuits électroniques du type carte à puce.

D'une manière générale, le procédé selon l'invention fait intervenir au moins :

- un algorithme A1 basé sur une fonction F1 à clé secrète pour calculer une donnée confidentielle $G_c$ telle que :

$$G_c = F1 (K_s, N_c)$$

où Ks est un clé secrète et Nc une donnée de base attribuée à chaque dispositif portatif, et
- un algorithme itératif A2 basé sur une fonction non inversible F2 à clé secrète pour calculer les cryptogrammes successifs $C_1$, $C_2$, ...tels que

$$C_1 = F2 (G_c, C_0)$$

$$C_{i+1} = F2 (G_c, C_i).$$

Pour mettre en oeuvre le procédé selon l'invention, chaque dispositif portatif dénommé ci-après carte comprend au moins et d'une façon connue en soi une mémoire non volatile du type EEPROM, des circuits de traitement tel qu'un processeur, et une interface d'entrée/sortie. Quant au serveur, il comprend des supports de stockage d'informations et des circuits de traitement associés. L'algorithme A2 qui sera exécuté par les cartes est avantageusement câblé, alors que les algorithmes A1 et A2 qui seront exécutés par le serveur sont mémorisés sous la forme de logiciels.

D'une manière générale et quelle que soit l'application envisagée, les cartes doivent être initialisées avant d'être remises aux utilisateurs.

Ces opérations d'initialisation sont effectuées par une personne habilitée dénommée ci-après distributeur, et ces opérations consistent à attribuer à chaque carte au moins:

- un numéro d'identification $N_c$,
- une donnée confidentielle $G_c$, et
- la valeur d'un cryptogramme $C_0$.

Chaque numéro d'identification $N_c$ est une donnée alphanumérique, et la valeur du cryptogramme initial $C_0$ est fonction de l'application envisagée.

La donnée confidentielle $G_c$ attribuée à chaque carte, peut être le résultat d'un calcul initial résultant de l'exécution de l'algorithme A1 précité, et cela sera le cas pour les applications décrites plus loin où la donnée confidentielle $G_c$ est diversifiée par le distributeur à partir d'une donnée de base et de l'algorithme A1 à clé secrète $K_s$ attribuée à un lot de cartes, la donnée de base étant par exemple le numéro d'identification $N_c$ attribué à chaque carte. Ainsi, la donnée confidentielle $G_c$ attribuée à chaque carte est telle que :

$$G_c = F1 (K_s, N_c).$$

Ces données d'initialisation qui sont différentes pour chaque carte sont mémorisées par le distributeur dans les mémoires respectives de ces cartes.

En parallèle, le distributeur doit procéder à l'initialisation du serveur, et ces opérations consistent à donner au serveur les moyens de pouvoir identifier chaque carte par son numéro d'identification $N_c$, de connaître la valeur de la donnée confidentielle $G_c$ ou les éléments lui permettant de calculer cette donnée, et de connaître la valeur du cryptogramme initial $C_0$.

A cet effet, le distributeur ouvre un fichier dans la mémoire du serveur où pour chaque carte initialisée, le distributeur mémorise le numéro d'identification $N_c$ en lui associant d'une part, la valeur de la donnée confidentielle $G_c$ ou les éléments lui permettant de la calculer et d'autre part, un cryptogramme $Q_0$ dont la valeur est égale à celle du cryptogramme initial $C_0$.

Dans une première application de banque à domicile, le distributeur initialise chaque carte en mémorisant dans sa mémoire un numéro d'identification $N_c$, une donnée confidentielle $G_c$ et la valeur d'un cryptogramme initial $C_0$, ces informations étant différentes d'une carte à l'autre. Dans cette première application, la valeur du cryptogramme $C_0$ est quelconque et par exemple égale à zéro.

Une fois ces informations mémorisées dans la carte, le distributeur procède à la lecture de la valeur du cryptogramme $C_0$ pour provoquer automatiquement l'exécution de l'algorithme A2 pour calculer le cryptogramme $C_1$ dont la valeur est fonction de la donnée confidentielle $G_c$ et de la valeur du cryptogramme précédent $C_0$, et la valeur de ce cryptogramme $C_1$ est mémorisée dans la carte à la place de celle du cryptogramme $C_0$.

Lors de l'opération d'initialisation du serveur, le distributeur mémorise dans un fichier du serveur et pour chaque carte d'un lot de cartes le numéro d'identification $N_c$, la clé secrète $K_s$ attribuée au lot de cartes pour pouvoir calculer ensuite la valeur de la donnée confidentielle $G_c$, et un cryptogramme $Q_c$ dont la valeur est égale à celle du cryptogramme initial $C_0$.

Dans cette première application, chaque carte peut être avantageusement équipée d'une interface de sortie vocale et d'une interface d'entrée/sortie à contacts.

L'utilisateur peut ainsi accéder au serveur à partir de son poste téléphonique connecté au serveur par le réseau téléphonique. Une fois que la liaison a été établie avec le serveur, le protocole d'identification de la carte de l'utilisateur est engagé par le serveur pour valider ou non l'accès demandé, sachant que ce protocole fait intervenir une première étape de synchronisation et une seconde étape d'authentification.

Dans la première étape de synchronisation, le serveur demande à l'utilisateur de faire émettre par sa carte au moins une première séquence d'identification contenant le numéro d'identification $N_c$ et la valeur du cryptogramme $C_1$ ou plus généralement du cryptogramme $C_1$, qui sont mémorisés dans la carte.

Cette première séquence d'identification est émise sous la forme d'une séquence vocale qui est transmise au serveur par l'intermédiaire du microphone du combiné téléphonique. D'une manière générale, cette émission est provoquée par suite de l'actionnement d'une touche prévue sur la carte et, suite à cette émission, la carte exécute automatiquement l'algorithme A2 pour calculer un nouveau cryptogramme $C_{i+1}$ dont la valeur est mémorisée à la place de celle du cryptogramme $C_i$.

Après réception de cette première séquence d'identification, le serveur recherche dans son fichier un numéro d'identification $N_c$ correspondant à celui qui vient d'être émis par la carte. Si cette recherche n'aboutit pas, le protocole d'identification est arrêté et le serveur ne valide pas l'accès demandé. Dans le cas contraire, la première étape de synchronisation se poursuit et le serveur prélève les valeurs de la clé secrète $K_s$ et du cryptogramme initial $Q_0$ qui sont associés au numéro d'identification $N_c$ de la carte qu'il a retrouvé dans son fichier.

Dans un premier temps, le serveur calcule la valeur de la donnée confidentielle $G_c$ de la carte à partir de la clé secrète $K_s$ et du numéro d'identification $N_c$ de la carte. Pour cela, le serveur exécute l'algorithme A1 tel que :

$$G_c = F1 \ (K_s, N_c).$$

Dans un second temps, le serveur exécute l'algorithme A2 pour calculer un premier cryptogramme $Q_1$ à partir de la donnée confidentielle $G_c$ et de la valeur du cryptogramme $Q_0$, tel que :

$$Q_1 = F2 \ (G_c, Q_0)$$

puis un deuxième cryptogramme tel que :

$$Q_2 = F2 \ (G_c, Q_1)$$

jusqu'à retrouver un cryptogramme $Q_n$ dont la valeur soit égale à celle du cryptogramme $C_i$ contenu dans la première séquence d'identification émise par la carte.

Si une telle égalité n'est pas satisfaite après un nombre d'itérations prédéfini, le protocole d'identification est arrêté et le serveur ne valide pas l'accès demandé. Dans le cas contraire, on donne au cryptogramme $Q_0$ associé au numéro d'identification $N_c$ de la carte dans le fichier du serveur, une nouvelle valeur qui est égale à celle du cryptogramme $C_i$ transmis par la carte, et la première étape de synchronisation est considérée comme étant satisfaite.

Dans une seconde étape d'authentification, le serveur valide ou non l'accès demandé par l'utilisateur. Concrètement, cette seconde étape d'authentification peut être considérée comme satisfaite si au moins la première étape de synchronisation a elle-même été satisfaite.

Cependant, pour améliorer la sécurité d'un protocole d'identification dans le cas d'une application de banque à domicile, la seconde étape d'authentification consiste à faire émettre par la carte une seconde séquence d'identification contenant à nouveau le numéro d'identification $N_c$ de la carte et la valeur du cryptogramme $C_{i+1}$ qui a été automatiquement calculée par la carte suite à l'émission de la première séquence d'identification. Cette seconde séquence d'identification est également émise sous forme vocale et transmise au serveur par le microphone du combiné téléphonique. A la réception, le serveur vérifie que le numéro d'identification $N_c$ transmis par la carte est identique à celui qui était contenu dans la première séquence d'identification, et exécute à nouveau l'algorithme A2 pour calculer le cryptogramme $Q_1$ à partir de la donnée confidentielle $G_c$ de la carte, que le serveur a déjà calculée après réception de la première séquence, et de la valeur du nouveau cryptogramme $Q_0$, sachant que la valeur de ce cryptogramme $Q_1$ doit être égale à celle du cryptogramme $C_{i+1}$ contenu dans la seconde séquence d'identification transmise par la carte.

Si une telle égalité n'est pas satisfaite, le serveur ne valide pas la demande d'accès de l'utilisateur. Dans le cas contraire, le serveur donne au cryptogramme $Q_0$ associé au numéro d'identification $N_c$ de la carte, une nouvelle valeur qui est égale à celle du cryptogramme $C_{i+1}$ transmis par la carte, et valide la demande d'accès de l'utilisateur.

La sécurité est effectivement renforcée par suite de deux séquences d'identification. En effet, un fraudeur pourrait à la limite composer au hasard une première séquence d'identification avec un premier cryptogramme dont la valeur pourrait être égale à celle d'un cryptogramme $Q_k$ calculé par le serveur après réception de la première séquence d'identification, mais il est statiquement quasiment impossible pour le fraudeur de pouvoir composer immédiatement après, une seconde séquence d'identification avec un second cryptogramme dont la valeur puisse être égale à celle du cryptogramme $Q_{k+1}$ calculé par le serveur après réception de la seconde séquence d'identification. Autrement dit, il est impossible pour un fraudeur de pouvoir émettre avec succès deux cryptogrammes successifs sans être en possession de la carte.

Dans cette application banque à domicile, l'accès est nominatif. En effet, une fois que le protocole d'identification a été satisfait, l'utilisateur doit émettre son code confidentiel ou « PIN CODE » pour que l'utilisateur soit authentifié par le serveur.

Dans une deuxième application de télépéage, le distributeur procède également à l'initialisation du serveur et d'un lot de cartes avant de remettre celles-ci aux utilisateurs.

Lors de l'opération d'initialisation de chaque carte du lot, le distributeur mémorise dans chaque carte, un numéro d'identification $N_c$, une donnée confidentielle $G_c$ et la valeur du cryptogramme $C_0$ initial. Dans cette deuxième application, la valeur du cryptogramme $C_0$ est avantageusement diversifiée à partir d'une donnée de base et de l'algorithme A1 à clé secrète $K_m$ (différent de $K_s$), cette donnée de base étant également le numéro d'identification $N_c$ attribué à la carte.

Par contre, l'opération d'initialisation du serveur n'est effectuée que partiellement par le distributeur avant de remettre les cartes aux utilisateurs. Cette initialisation partielle du serveur consiste à mémoriser dans un fichier du serveur les numéros d'identification attribués au lot de cartes et la clé secrète $K_s$ associée à ce lot pour permettre au serveur de pouvoir calculer ensuite la valeur de la donnée confidentielle $G_c$ de chaque carte. Autrement dit, avant la première utilisation de la carte, le serveur ne mémorise aucune valeur d'un cryptogramme initial $Q_0$.

L'opération d'initialisation du serveur est complétée lorsque l'utilisateur va demander un premier accès au serveur par l'intermédiaire d'une borne de péage. Dans ce cas, au passage du véhicule automobile, la borne de péage fait émettre par la carte une première séquence d'identification contenant au moins le numéro d'identification $N_c$ de la carte et la valeur du cryptogramme $C_0$ qui sont mémorisés dans la carte. Pour cette deuxième application, chaque carte est avantageusement équipée d'une interface de sortie radiofréquence.

Cette première séquence est transmise au serveur et celui-ci recherche si le numéro d'identification $N_c$ correspondant à celui que vient d'émettre la carte appartient bien au lot de cartes. Si cette recherche n'aboutit pas, le serveur détecte et enregistre un franchissement illégal du poste de péage par un véhicule automobile. Dans le cas contraire, le serveur enregistre dans un fichier le numéro d'identification $N_c$ de la carte et lui associe un cryptogramme $Q_0$ dont la valeur est égale à celle du cryptogramme $C_0$ transmis par la carte.

Ensuite, la borne fait émettre une seconde séquence d'identification contenant à nouveau le numéro d'identification $N_c$ de la carte et le cryptogramme $C_1$ qui a été calculé automatiquement par la carte à la suite de l'émission de la première séquence d'identification. Après transmission de cette seconde séquence d'identification, le serveur cherche dans son fichier le numéro d'identification $N_c$ correspondant à celui qu'il vient de recevoir de la carte et calcule tout d'abord la valeur de la donnée confidentielle $G_c$ de la carte en exécutant l'algorithme A1 qui prend en compte le numéro d'identification $N_c$ de la carte et la valeur de la clé secrète $K_s$ attribuée au lot de cartes.

Ensuite, le serveur calcule à partir du cryptogramme $Q_0$ qu'il a associé au numéro d'identification $N_c$ de la carte et de la donnée confidentielle $G_c$, le cryptogramme $Q_1$ en exécutant l'algorithme A2 et vérifie que sa valeur est bien égale à celle du cryptogramme $C_1$ contenu dans la seconde séquence d'identification. Si une telle égalité est satisfaite, le véhicule automobile franchit légalement le poste de péage, et le serveur donne au cryptogramme $Q_0$ associé au numéro d'identification $N_c$ de la carte, une nouvelle valeur égale à celle du cryptogramme $C_1$ transmis par la carte.

Dans cette application de télépéage, l'initialisation du serveur est achevée après réception de deux séquences d'identification consécutives émises par la carte lors du premier passage du véhicule automobile. Avantageusement, lors des passages suivants, la carte ne transmettra qu'une seule séquence d'identification et le protocole d'identification se limitera à la première étape de synchronisation qui a été décrite précédemment dans le cas de l'application de banque à domicile et qui suffit à l'authentification de la carte.

Dans cette application de télépéage telle qu'envisagée précédemment, les cartes ne sont pas nominatives.

Dans une troisième application, le procédé est utilisé dans un dispositif d'alarme conçu pour un véhicule automobile. Comme dans les applications précédentes, chaque carte doit être initialisée ainsi que le serveur qui est ici constitué d'un dispositif d'alarme propre à chaque véhicule automobile.

L'opération d'initialisation des cartes est effectuée par le distributeur, sachant qu'une ou plusieurs cartes peuvent être attribuées à un même utilisateur. Chaque carte est alors initialisée en mémorisant dans sa mémoire un numéro d'identification $N_c$, une donnée confidentielle $G_c$ et la valeur d'un cryptogramme initial $C_0$ qui, dans cette application particulière, est égale à la donnée confidentielle $G_c$.

De préférence, les cartes sont ensuite verrouillées par le distributeur pour éviter leur utilisation en cas de vol par exemple.

A ce stade, les dispositifs d'alarme des véhicules automobiles ne sont pas encore initialisés. Lors de la prise de possession du véhicule automobile par l'utilisateur, le distributeur procède à l'initialisation du dispositif d'alarme de ce véhicule. Cette opération consiste à déverrouiller les cartes, à relier l'une de ces cartes au dispositif d'alarme et à faire émettre par la carte une première séquence d'identification contenant au moins le numéro d'identification $N_c$ et la valeur du cryptogramme initial $C_0$ qui est égale à celle de la donnée confidentielle $G_c$. Le dispositif d'alarme mémorise dans une mémoire non volatile du type EEPROM, le numéro d'identification $N_c$, un cryptogramme $Q_0$ dont la valeur est égale à celle du cryptogramme initial $C_0$ transmis par la carte, et une donnée confidentielle $G_c$ dont la valeur est égale à celle du cryptogramme $Q_0$.

Ensuite, le distributeur fait émettre par la carte une seconde séquence d'identification contenant à nouveau le numéro d'identification $N_c$ de la carte et le cryptogramme $C_1$ qui a été calculé automatiquement à la suite de l'émission de la première séquence d'identification. Après transmission de cette seconde séquence, le dispositif d'alarme vérifie que le numéro d'identification $N_c$ correspond bien à celui qu'il a mémorisé et exécute l'algorithme A2 pour calculer la valeur du cryptogramme $Q_1$ à partir de celle du cryptogramme $Q_0$ et de la donnée confidentielle $G_c$ sans avoir à calculer cette dernière comme dans le cas des deux applications précédentes. Si les valeurs des cryptogrammes $Q_1$ et $C_1$ sont égales, le cryptogramme $Q_0$ prend une nouvelle valeur qui est égale à celle du cryptogramme $C_1$, et l'opération d'initialisation du dispositif d'alarme est terminée pour cette carte.

La carte est ensuite remise à l'utilisateur avec les clés du véhicule, sachant que l'utilisateur peut recevoir plusieurs cartes mais en nombre limité, deux ou trois par exemple, qui sont initialisées pour le dispositif d'alarme d'un même véhicule.

Dans cette application, chaque carte qui se présente plus généralement sous la forme d'un petit boîtier qui est au moins équipé d'une interface de sortie radiofréquence.

Dans ces conditions, lorsque l'utilisateur approche de son véhicule, il appuie sur une touche prévue sur le boîtier pour faire émettre une séquence d'identification contenant au moins le numéro d'identification $N_c$ et la valeur du cryptogramme $C_i$ qui sont mémorisés dans le boîtier. Après transmission, le dispositif d'alarme vérifie que le numéro d'identification $N_c$ est bien égal à celui qui est mémorisé dans sa mémoire, et exécute plusieurs fois l'algorithme A2 pour calculer les cryptogrammes successifs $Q_1$, $Q_2$, ..., jusqu'à retrouver un cryptogramme $Q_n$ dont la valeur doit être égale à celle du cryptogramme $C_i$ contenu dans la séquence d'identification émise par le boîtier, après un nombre d'itérations prédéfini.

Si cette première étape de synchronisation est satisfaite, le dispositif d'alarme donne une nouvelle valeur au cryptogramme $Q_0$ qui est égale à celle du cryptogramme $C_1$, et déverrouille les portes du véhicule automobile. Dans le cas contraire, l'utilisateur est alors présumé être un fraudeur tentant de forcer les portes du véhicule automobile et une alarme peut se déclencher automatiquement.

Dans cette application, la première étape de synchronisation suffit à l'authentification. Il est à noter également que dans cette application, les cartes ne sont pas nominatives.

Dans les applications envisagées précédemment, le protocole d'identification est du type unidirectionnel puisque seul le serveur demande à la carte de lui communiquer des séquences d'identification pour lui permettre d'authentifier cette carte.

Cependant, dans le cadre de l'invention, on peut également envisager un protocole d'identification du type bidirectionnel pour permettre une authentification mutuelle entre une carte et un serveur.

Dans ce cas, au cours de l'étape de synchronisation, la carte et le serveur s'échangent les valeurs des cryptogrammes $C_i$ (carte) et $Q_0$ (serveur) pour calculer ensuite les cryptogrammes $C_i+1$ (côté carte) et $Q_1$ (côté serveur) à partir des valeurs des cryptogrammes $C_i$ et $Q_0$. Le serveur communique la valeur du cryptogramme $Q_1$ à la carte pour permettre à celle-ci d'authentifier le serveur en comparant les valeurs des cryptogrammes $Q_1$ et $C_i+1$. Si cette égalité n'est pas satisfaite, l'accès à la carte sera refusé. Par contre, en cas d'égalité, la carte calcule la valeur du cryptogramme $C_i+2$ et la transmet au serveur pour permettre à celui-ci d'authentifier la carte en comparant la valeur de ce cryptogramme $C_i+2$ à celle du cryptogramme $Q_2$ calculé par le serveur. Si cette égalité est satisfaite, l'accès au serveur sera validé, sinon il sera refusé.

Enfin, dans d'autres applications du type radio messagerie personnelle, un émetteur (serveur d'appel) peut envoyer un message à plusieurs récepteurs portatifs. Cependant, il peut s'avérer souhaitable de coder le message transmis pour que seul le récepteur auquel est destiné ce message puisse le décoder.

Dans cette dernière application, la valeur du cryptogramme $C_i$ (côté émetteur) peut être initialisée à partir d'une valeur quelconque et, pour envoyer un message, le serveur calcule notamment les valeurs successives des cryptogrammes $C_i+1$ et $C_i+2$, puis code le message à partir de la valeur du cryptogramme $C_i+2$.

Ensuite, le serveur envoie une séquence d'identification contenant le numéro d'identification $N_c$ du récepteur qui doit recevoir le message, les valeurs des cryptogrammes $C_i$, $C_i+1$ et le message codé. Le récepteur $N_c$ qui reçoit cette séquence d'identification va calculer la valeur du cryptogramme $Q_1$ à partir de la valeur d'un cryptogramme $Q_0$ qui a la valeur du cryptogramme $C_1$ transmis par l'émetteur. Si la valeur du cryptogramme $Q_1$ est égale à celle du cryptogramme $C_i+1$, alors le récepteur calculera la valeur du cryptogramme $Q_2$ qui sera donc égale à la valeur du cryptogramme $C_i+2$ et permettra au récepteur $N_c$ de décoder le message.

## Revendications

1. Procédé pour faire autoriser par un serveur l'accès à un service à partir de dispositifs portatifs à microcircuits électroniques du type carte à mémoire par exemple, ce procédé consistant à effectuer des opérations d'initialisation de chaque dispositif portatif et du serveur et, lors d'une demande d'accès d'un utilisateur à partir d'un dispositif portatif, à mettre en oeuvre une première étape de synchronisation consistant :

   - à faire émettre par le dispositif portatif au moins une première séquence d'informations contenant au moins un numéro d'identification ($N_c$) attribué au dispositif portatif et un cryptogramme ($C_i$) calculé par des circuits de traitement du dispositif portatif, et tel que sa valeur est calculée au moins à partir de celle du cryptogramme précédent ($C_{i-1}$),
   - à transmettre cette première séquence d'informations au serveur via un terminal,
   - à faire calculer par des circuits de traitement du serveur des cryptogrammes successifs ($Q_1$, $Q_2$, ...) à partir du cryptogramme ($Q_0$) mémorisé dans le serveur et dont la valeur est égale à celle du cryptogramme ($C_{i-n}$) qui était contenu dans la dernière séquence d'informations émise par le dispositif portatif et transmise au serveur, jusqu'à retrouver un cryptogramme ($Q_n$) dont la valeur soit égale à celle du cryptogramme ($C_i$) contenu dans la première séquence d'informations, et
   - à donner au cryptogramme ($Q_0$) mémorisé dans le serveur une nouvelle valeur égale à celle du cryptogramme ($C_i$), et à mettre en oeuvre une deuxième étape d'authentification consistant, à ne faire valider la demande d'accès par le serveur que si au moins la première étape de synchronisation a été satisfaite,

   **caractérisé en ce qu'**il consiste :

   - à calculer les cryptogrammes par l'exécution d'un algorithme itératif ($A_2$) basé sur une fonction non inversible ($F_2$) à clé secrète,
   - à faire prendre en compte par les algorithmes itératifs ($A_2$) des dispositifs portatifs et du serveur une donnée confidentielle ($G_c$) attribuée à chaque dispositif portatif, et
   - à diversifier la donnée confidentielle ($G_c$) attribuée à chaque dispositif portatif à partir d'une donnée de base, tel le numéro d'identification ($Nc$) du dispositif portatif, et d'un algorithme ($A_1$) correspondant à une fonction ($F_1$) à clé secrète ($K_s$), une même clé secrète ($Ks$) étant utilisée pour un lot de dispositifs portatifs.

2. Procédé selon la revendication 1, **caractérisé en ce qu'**il consiste à faire exécuter par le serveur l'algorithme (A1) pour recalculer la donnée confidentielle (Gc) attribuée au dispositif portatif qui a émis une séquence d'informations, avant d'exécuter l'algorithme (A2) pour calculer les cryptogrammes successifs (Q1, Q2, ...) qui prennent en compte cette donnée confidentielle (Gc).

3. Procédé selon la revendication 1 ou 2, **caractérisé en ce qu'**il consiste dans la deuxième étape d'authentification et une fois que la première étape de synchronisation a été satisfaite :

   - à faire émettre par le dispositif portatif une seconde séquence d'informations contenant au moins le numéro d'identification ($N_c$) du dispositif portatif et le cryptogramme ($C_{i+1}$) calculé par le dispositif portatif à partir de la valeur du cryptogramme ($C_i$) contenu dans la première séquence d'informations et mémorisé dans le dispositif portatif,
   - à transmettre cette seconde séquence d'informations au serveur via le terminal,
   - à faire exécuter par le serveur l'algorithme (A2) pour calculer le cryptogramme ($Q_1$) à partir de la valeur du cryptogramme ($Q_0$) mémorisé dans le serveur,
   - à faire valider la demande d'accès par le serveur que si les valeurs des deux cryptogrammes ($C_{i+1}$) et ($Q_1$) sont égales, et
   - à donner au cryptogramme ($Q_0$) mémorisé dans le serveur une nouvelle valeur égale à celle du cryptogramme ($C_{i+1}$).

4. Procédé selon l'une quelconque des revendications précédentes, **caractérisé en ce qu'**il consiste à faire calculer et mémoriser par chaque dispositif portatif un nouveau cryptogramme ($C_{i+1}$) lorsqu'il émet une séquence d'informations contenant le cryptogramme ($C_i$) précédemment calculé.

5. Procédé selon l'une quelconque des revendications précédentes, **caractérisé en ce que** l'opération d'initialisation de chaque dispositif portatif est effectuée par une personne habilitée avant de remettre le dispositif portatif à un utilisateur, et **en ce que** cette opération d'initialisation consiste à faire mémoriser dans le dispositif portatif au moins les informations suivantes :

- un numéro d'identification ($N_c$) attribué au dispositif portatif,
- une donnée confidentielle ($G_c$) attribuée au dispositif portatif, et
- la valeur d'un cryptogramme initial ($C_0$) pour permettre aux circuits de traitement du dispositif portatif de pouvoir calculer ensuite les cryptogrammes successifs ($C_1$, $C_2$, ...).

6. Procédé selon la revendication 5, **caractérisé en ce que** l'opération d'initialisation du serveur est effectuée par une personne habilitée avant de remettre un dispositif portatif à un utilisateur, et **en ce que** cette opération d'initialisation consiste à faire mémoriser dans le serveur et pour chaque dispositif portatif au moins les informations suivantes :

- le numéro d'identification ($N_c$) attribué au dispositif portatif,
- la clé secrète ($K_s$) permettant au serveur de pouvoir calculer ensuite la valeur de la donnée confidentielle ($G_c$) qui a été attribuée au dispositif portatif, et
- un cryptogramme ($Q_0$) dont la valeur est égale à celle du cryptogramme initial ($C_0$), la valeur de ce dernier étant quelconque et par exemple égale à zéro.

7. Procédé selon la revendication 5, **caractérisé en ce qu'**une opération d'initialisation partielle du serveur consiste, avant de remettre le dispositif portatif à un utilisateur :

- à faire mémoriser dans le serveur par une personne habildée avant de remettre un lot de dispositifs portatifs aux utilisateurs, au moins le numéro d'identification ($N_c$) attribué aux dispositifs portatifs et la clé secrète ($K_s$) associée à ce lot de dispositifs portatifs pour permettre au serveur de calculer ensuite la valeur de la donnée confidentielle ($G_c$) qui a été attribuée à chaque dispositif portatif, et
  **en ce que** l'opération d'initialisation du serveur est complétée lorsque l'utilisateur demande au serveur un premier accès à partir d'un dispositif portatif, cette fin d'initialisation consistant :
- à faire émettre par le dispositif portatif une première séquence d'informations contenant au moins le numéro d'identification ($N_c$) attribué au dispositif portatif et le cryptogramme initial ($C_0$) mémorisé dans le dispositif portatif,

- à transmettre cette première séquence d'informations au serveur via un terminal,
- à vérifier que le numéro d'identification ($N_c$) correspond à un numéro attribué au lot de dispositifs portatifs,
- à associer dans le serveur à ce numéro d'identification ($N_c$) reçu, un cryptogramme $Q_0$ dont la valeur est égale à celle du cryptogramme ($C_0$),
- à faire émettre par le dispositif portatif une seconde séquence d'informations contenant au moins le numéro d'identification ($N_c$) attribué au dispositif portatif et le cryptogramme ($C_1$) mémorisé dans le dispositif portatif,
- à transmettre cette seconde séquence d'informations au serveur via le terminal,
- à faire exécuter par le serveur l'algorithme (A1) pour calculer la valeur de la donnée confidentielle ($G_c$) attribuée au dispositif portatif,
- à faire exécuter par le serveur l'algorithme (A2) pour calculer la valeur du cryptogramme ($Q_1$) calculé à partir de la valeur du cryptogramme ($Q_0$) associé au numéro d'identification ($N_c$) de ce dispositif portatif et de la donnée confidentielle ($G_c$),
- à vérifier que la valeur du cryptogramme ($Q_1$) calculée par le serveur est bien égale à la valeur du cryptogramme ($C_1$) transmis par le dispositif portatif,
- à donner au cryptogramme ($Q_0$) associé au numéro d'identification ($N_c$) mémorisé dans le serveur, une nouvelle valeur qui est égale à celle du cryptogramme ($C_1$) pour terminer l'opération d'initialisation du serveur, et
- à faire valider par le serveur la demande d'accès que si au moins l'opération d'initialisation du serveur a été terminée avec succès.

8. Procédé selon la revendication 7, **caractérisé en ce qu'**il consiste à diversifier la valeur du cryptogramme ($C_0$) à partir d'une donnée de base et de l'algorithme (A1) à clé secrète ($K_m$), différente de la clé secrète ($K_s$), la donnée de base étant par exemple le numéro d'identification ($N_c$) attribué au dispositif portatif.

9. Procédé selon la revendication 5, **caractérisé en ce qu'**il consiste, lors de l'opération d'initialisation du dispositif portatif, à donner au cryptogramme initial ($C_0$) la valeur de la donnée confidentielle ($G_c$) attribuée au dispositif portatif.

10. Procédé selon la revendication 9, **caractérisé en ce que** l'opération d'initialisation du serveur est effectuée par une personne habilitée avant de remettre un dispositif portatif à un utilisateur, et **en ce que** cette opération d'initialisation consiste :

- à faire émettre par le dispositif portatif une séquence d'identification contenant au moins le numéro d'identification attribué au dispositif portatif et le cryptogramme initial $(C_0)$,
- à transmettre cette séquence d'initialisation au serveur via un terminal,
- à mémoriser dans le serveur le numéro d'identification $(N_c)$ attribué au dispositif portatif,
- à associer à ce numéro d'identification $(N_c)$ un cryptogramme $(Q_0)$ dont la valeur est égale à celle du cryptogramme initial $(C_0)$ et une donnée confidentielle $(G_c)$ dont la valeur est égale à celle du cryptogramme $(C_0)$,
- à faire émettre par le dispositif portatif une seconde séquence d'identification contenant au moins le numéro d'identification $(N_c)$ attribué au dispositif portatif et le cryptogramme $(C_1)$ mémorisé dans le dispositif portatif,
- à transmettre cette seconde séquence d'identification au serveur via le terminal,
- à faire exécuter par le serveur l'algorithme $(A2)$ pour calculer la valeur du cryptogramme $(Q_1)$ à partir de la valeur du cryptogramme $(Q_0)$ associé au numéro d'identification $(N_c)$ de ce dispositif portatif et de la donnée confidentielle $(G_c)$,
- à vérifier que la valeur du cryptogramme $(Q_1)$ calculée par le serveur est bien égale à la valeur du cryptogramme $(C_1)$ transmis par le dispositif portatif,
- à donner au cryptogramme $(Q_0)$ associé au numéro d'identification mémorisé dans le serveur, une nouvelle valeur qui est égale à celle du cryptogramme $(C_1)$ pour terminer l'opération d'initialisation du serveur, et
- faire valider par le serveur la demande d'accès que si au moins l'opération d'initialisation du serveur a été terminée avec succès.

**Patentansprüche**

1. Verfahren, um von einem Server den Zugriff auf einen Dienst ausgehend von tragbaren Einrichtungen mit elektronischen Mikroschaltungen beispielsweise von der Art einer Speicherkarte autorisieren zu lassen, wobei das Verfahren darin besteht, Initialisierungsoperationen jeder tragbaren Einrichtung und des Servers durchzuführen und bei einer Zugriffsanforderung eines Benutzers ausgehend von einer tragbaren Einrichtung einen ersten Schritt der Synchronisierung in Gang zu setzen, welcher darin besteht:

- durch die tragbare Einrichtung zumindest eine erste Informationssequenz aussenden zu lassen, welche mindestens eine der tragbaren Einrichtung zugeordnete Kennzahl $(N_c)$ und ein durch Verarbeitungsschaltungen der tragbaren Einrichtung derart berechnetes Kryptogramm $(C_i)$, dass sein Wert zumindest ausgehend von demjenigen des vorhergehenden Kryptogramms $(C_{i-1})$ berechnet wird, enthält,
- über ein Terminal diese erste Informationssequenz an den Server zu übertragen,
- durch Verarbeitungsschaltungen des Servers ausgehend von einem in dem Server gespeicherten Kryptogramm $(Q_0)$, dessen Wert gleich demjenigen des Kryptogramms $(C_{i-n})$ ist, welches in der letzten von der tragbaren Einrichtung äusgesendeten und an den Server übertragenen Informationssequenz enthalten war, aufeinanderfolgende Kryptogramme $(Q_1, Q_2, ...)$ berechnen zu lassen, bis ein Kryptogramm $(Q_n)$ wiedergefunden wird, dessen Wert gleich demjenigen des in der ersten Informationssequenz enthaltenen Kryptogramms ist, und
- dem in dem Server gespeicherten Kryptogramm $(Q_0)$ einen neuen Wert gleich demjenigen des Kryptogramms $(C_i)$ zu geben, und darin, einen zweiten Schritt der Authentifizierung in Gang zu setzen, welcher, um die Zugriffsanforderung durch den Server nur zu validieren, wenn mindestens der erste Schritt der Synchronisierung erfüllt ist, darin besteht:

- Kryptogramme durch Ausführen eines iterativen Algorithmus basierend auf einer nicht invertierbaren Funktion $(F_2)$ mit geheimem Schlüssel zu berechnen,
- durch iterative Algorithmen der tragbaren Einrichtungen und des Servers ein jeder tragbaren Einrichtung zugeordnetes vertrauliches Datum $(G_c)$ berücksichtigen zu lassen, und
- das jeder tragbaren Einheit zugeordnete vertrauliche Datum $(G_c)$ ausgehend von einem Basisdatum wie der Kennzahl $(N_c)$ der tragbaren Einrichtung und einem Algorithmus $(A_1)$, welcher einer Funktion $(F_1)$ mit geheimem Schlüssel $(K_s)$ entspricht, zu variieren, wobei ein gleicher geheimer Schlüssel $(K_s)$ für eine bestimmte Menge der tragbaren Einrichtungen verwendet wird.

2. Verfahren nach Anspruch 1, **dadurch gekennzeichnet, dass** es darin besteht, durch den Server den Algorithmus $(A_1)$ zur Neuberechnung des vertraulichen Datums $(G_c)$, welches der tragbaren Einrichtung zugeordnet ist, welche eine Informationssequenz ausgesendet hat, ausführen zu lassen, bevor der Algorithmus $(A_2)$ zur Berechnung der aufeinanderfolgenden Kryptogramme $(Q_1, Q_2, ...)$, welche dieses vertrauliche Datum $(G_c)$ berücksichtigen, ausgeführt wird.

3. Verfahren nach Anspruch 1 oder 2, **dadurch gekennzeichnet, dass** es bei dem zweiten Schritt der Authentifizierung und sobald der erste Schritt der Synchronisierung erfüllt ist darin besteht:

- durch die tragbare Einrichtung eine zweite Informationssequenz aussenden zu lassen, welche mindestens die Kennzahl ($N_c$) der tragbaren Einrichtung und das von der tragbaren Einrichtung ausgehend von dem in der ersten Informationssequenz enthaltenen und in der tragbaren Einrichtung gespeicherten Kryptogramm ($C_i$) berechnete Kryptogramm ($C_{i+1}$) enthält,
- diese zweite Informationssequenz über das Terminal an den Server zu übertragen,
- durch den Server den Algorithmus ($A_2$) zum Berechnen des Kryptogramms ($Q_1$) ausgehend von dem in dem Server gespeicherten Kryptogramm ($Q_0$) ausführen zu lassen,
- die Zugriffsanforderung nur durch den Server zu validieren, wenn die Werte der zwei Kryptogramme ($C_{i+1}$) und ($Q_1$) gleich sind, und
- dem in dem Server gespeicherten Kryptogramm ($Q_0$) einen neuen Wert gleich demjenigen des Kryptogramms ($C_{i+1}$) zu geben.

4. Verfahren nach einem der vorhergehenden Ansprüche, **dadurch gekennzeichnet, dass** es darin besteht, von jeder tragbaren Einrichtung ein neues Kryptogramm ($C_{i+1}$) berechnen und speichern zu lassen, wenn es eine Informationssequenz aussendet, welches das vorher berechnete Kryptogramm ($C_i$) enthält.

5. Verfahren nach einem der vorhergehenden Ansprüche, **dadurch gekennzeichnet, dass** die Initialisierungsoperation jeder tragbaren Einrichtung durch eine berechtigte Person durchgeführt wird, bevor die tragbare Einrichtung einem Benutzer ausgehändigt wird, und dass diese Initialisierungsoperation darin besteht, in der tragbaren Einrichtung zumindest die folgenden Informationen speichern zu lassen:

- eine der tragbaren Einrichtung zugeordnete Kennzahl ($N_c$),
- ein der tragbaren Einrichtung zugeordnetes vertrauliches Datum ($G_c$), und
- den Wert eines anfänglichen Kryptogramms ($C_0$), um es den Verarbeitungsschaltungen der tragbaren Einrichtung zu ermöglichen, dann die aufeinanderfolgenden Kryptogramme ($C_1$, $C_2$, ...) berechnen zu können.

6. Verfahren nach Anspruch 5, **dadurch gekenn-**

**zeichnet, dass** die Initialisierungsoperation des Servers von einer berechtigten Person durchgeführt wird, bevor eine tragbare Einrichtung einem Benutzer ausgehändigt wird, und dass diese Initialisierungsoperation darin besteht, in dem Server für jede tragbare Einrichtung zumindest die folgenden Informationen speichern zu lassen:

- die der tragbaren Einrichtung zugeordnete Kennzahl ($N_c$),
- den geheimen Schlüssel ($K_s$), welcher es dem Server ermöglicht, dann den Wert des der tragbaren Einrichtung zugeordneten vertraulichen Datums berechnen zu können,
- ein Kryptogramm ($Q_0$), dessen Wert gleich demjenigen des anfänglichen Kryptogramms ($C_0$) ist, wobei der Wert dieses letzteren irgendeiner und beispielsweise gleich Null ist.

7. Verfahren nach Anspruch 5, **dadurch gekennzeichnet, dass** eine teilweise Initialisierungsoperation des Servers, bevor die tragbare Einrichtung einem Benutzer ausgehändigt wird, darin besteht:

- in dem Server durch eine berechtigte Person, bevor eine bestimmte Menge der tragbaren Einrichtungen den Benutzern ausgehändigt wird, zumindest die den tragbaren Einrichtungen zugeordnete Kennzahl ($N_c$) und den mit dieser bestimmten Menge der tragbaren Einrichtungen verknüpften geheimen Schlüssel ($K_s$) speichern zu lassen, um es dem Server zu ermöglichen, anschließend den Wert des vertraulichen Datums, welches jeder tragbaren Einrichtung zugeordnet wurde, zu berechnen, und dass die Initialisierungsoperation des Servers vervollständigt wird, wenn der Benutzer von dem Server einen ersten Zugriff ausgehend von einer tragbaren Einrichtung anfordert, wobei dieses Ende der Initialisierung darin besteht:

  - von der tragbaren Einrichtung eine erste Informationssequenz aussenden zu lassen, welche zumindest die der tragbaren Einrichtung zugeordnete Kennzahl ($N_c$) und das in der tragbaren Einrichtung gespeicherte anfängliche Kryptogramm ($C_0$) enthält,
  - diese erste Informationssequenz über ein Terminal an den Server zu übertragen,
  - zu verifizieren, dass die Kennzahl ($N_c$) einer der bestimmten Menge der tragbaren Einrichtungen zugeordneten Zahl entspricht,
  - in dem Server mit dieser empfangenen Kennzahl ($N_c$) ein Kryptogramm ($Q_0$) zu

verknüpfen, dessen Wert gleich desjenigen des Kryptogramms ($C_0$) ist,

- von der tragbaren Einrichtung eine zweite Informationssequenz aussenden zu lassen, welche zumindest die der tragbaren Einrichtung zugeordnete Kennzahl ($N_c$) und das in der tragbaren Einrichtung gespeicherte Kryptogramm ($C_1$) enthält,
- diese zweite Informationssequenz über das Terminal an den Server zu übertragen,
- durch dem Server den Algorithmus ($A_1$) zum Berechnen des Wertes des der tragbaren Einrichtung zugeordneten vertraulichen Datums ($G_c$) ausführen zu lassen,
- durch den Server den Algorithmus ($A_2$) zum Berechnen des Wertes des ausgehend von dem Wert des mit der Kennzahl ($N_c$) dieser tragbaren Einrichtung verknüpften Kryptogramms ($Q_0$) und des vertraulichen Datums ($G_c$) berechneten Kryptogramms ($Q_1$) ausführen zu lassen,
- zu verifizieren, dass der Wert des von dem Server berechneten Kryptogramms ($Q_1$) gleich dem Wert des von der tragbaren Einrichtung übertragenen Kryptogramms ($C_1$) ist,
- dem mit der Kennzahl ($N_c$) verknüpften in dem Server gespeicherten Kryptogramm ($Q_0$) einen neuen Wert zu geben, welcher gleich demjenigen des Kryptogramms ($C_1$) ist, um die Initialisierungsoperation des Servers zu beenden, und
- durch den Server die Zugriffsanforderung validieren zu lassen, wenn zumindest die Initialisierungsoperation des Servers erfolgreich beendet wurde.

8. Verfahren nach Anspruch 7, **dadurch gekennzeichnet, dass** es darin besteht, den Wert des Kryptogramms ($C_0$) ausgehend von einem Basisdatum und dem Algorithmus ($A_1$) mit geheimen Schlüssel ($K_m$), welcher sich von dem geheimen Schlüssel ($K_s$) unterscheidet, zu variieren, wobei das Basisdatum beispielsweise die der tragbaren Einrichtung zugeordnete Kennzahl ($N_c$) ist.

9. Verfahren nach Anspruch 5, **dadurch gekennzeichnet, dass** es darin besteht, bei der Initialisierungsoperation der tragbaren Einrichtung dem anfänglichen Kryptogramm ($C_0$) den Wert des der tragbaren Einrichtung zugeordneten vertraulichen Datums ($G_c$) zu geben.

10. Verfahren nach Anspruch 9, **dadurch gekennzeichnet, dass** die Initialisierungsoperation des Servers durch eine berechtigte Person durchgeführt wird, bevor eine tragbare Einrichtung einem Benutzer übergeben wird, und dass diese Initialisierungsoperation darin besteht:

- von der tragbaren Einrichtung eine Identifikationssequenz aussenden zu lassen, welche zumindest die der tragbaren Einrichtung zugeordnete Kennzahl und das anfängliche Kryptogramm ($C_0$) enthält,
- diese Initialisierungssequenz über ein Terminal an den Server zu übertragen,
- mit dieser Kennzahl ($N_c$) ein Kryptogramm ($Q_0$), dessen Wert gleich demjenigen des anfänglichen Kryptogramms ($C_0$) ist, und ein vertrauliches Datum ($G_c$), dessen Wert gleich demjenigen des Kryptogramms ($C_0$) ist, zu verknüpfen,
- durch die tragbare Einrichtung eine zweite Identifikationssequenz aussenden zu lassen, welche zumindest die der tragbaren Einrichtung zugeordnete Kennzahl ($N_c$) und das in der tragbaren Einrichtung gespeicherte Kryptogramm ($C_1$) enthält,
- diese zweite Identifikationssequenz über das Terminal an den Server zu übertragen,
- durch den Server den Algorithmus ($A_2$) zum Berechnen des Wertes des Kryptogramms ($Q_1$) ausgehend von dem Wert des mit der Kennzahl ($N_c$) dieser tragbaren Einrichtung verknüpften Kryptogramms ($Q_0$) und des vertraulichen Datums ($G_c$) ausführen zu lassen,
- zu verifizieren, das der Wert des durch den Server berechneten Kryptogramms ($Q_1$) gleich dem Wert des von der tragbaren Einrichtung übertragenen Kryptogramms ($C_1$) ist,
- dem mit der Kennzahl verknüpften in dem Server gespeicherten Kryptogramm ($Q_0$) einen neuen Wert zu geben, welcher gleich demjenigen des Kryptogramms ($C_1$) ist, um die Initialisierungsoperation des Servers zu beenden, und
- durch den Server die Zugriffsanforderung validieren zu lassen, falls zumindest die Initialisierungsoperation des Servers mit Erfolg beendet wurde.

**Claims**

1. A method of enabling a server to authorize access to a service from portable devices having electronic microcircuits, e.g. devices of the smart card type, said method consisting in initializing each portable device and the server, and, when a user requests access from a portable device, consisting in implementing a synchronization first step consisting in:

   causing the portable device to transmit at least a first information sequence containing at least an identity number ($N_c$) allocated to the portable device, and a cryptogram $(C_i)$ computed by processing circuits of the portable device, and being such that its value is computed at least on the basis of the value of the preceding cryptogram $(C_{i-1})$;

transmitting the first information sequence to the server via a terminal;

causing processing circuits of the server to compute successive cryptograms $(Q_1, Q_2, ...)$ on the basis of the cryptogram $(Q_0)$ stored in the server and whose value is equal to the value of the cryptogram $(C_{i-n})$ which was contained in the most recent information sequence transmitted by the portable device to the server, until a cryptogram $(Q_n)$ is found whose value is equal to the value of the cryptogram $(C_i)$ contained in the first information sequence; and

giving a new value to the cryptogram $(Q_0)$ stored in the server, which new value is equal to the value of the cryptogram $(C_i)$;

and implementing an authentication second step consisting in causing the access request to be validated by the server only if at least the synchronization first step has been satisfied, the method being **characterized in that** it consists in:

computing the cryptograms by executing an iterative algorithm $(A_2)$ that is based on a non-invertible secret key function $(F_2)$;

causing the iterative algorithms $(A_2)$ of the portable devices and of the server to take account of confidential data $(G_c)$ allocated to each portable device; and

diversifying the confidential data $(G_c)$ allocated to each portable device on the basis of base data, such as the identity number $(N_c)$ of the portable device, and on the basis of an algorithm (A1) corresponding to a function (F1) having a secret key $(K_s)$, with a batch of portable devices sharing a secret key $(K_s)$ in common.

**2.** A method according to claim 1, **characterized in that** it consists in the server executing the algorithm $(A_1)$ so as to re-compute the confidential data $(G_c)$ allocated to the portable device which has transmitted an information sequence, before executing the algorithm $(A_2)$ so as to compute successive cryptograms $(Q_1, Q_2, ...)$ which take account of said confidential data $(G_c)$.

**3.** A method according to claim 1 or claim 2, **characterized in that**, in the authentication second step and once the synchronization first step has been satisfied, it consists in:

causing the portable device to transmit a second information sequence containing at least the identity number $(N_c)$ of the portable device and the cryptogram $(C_{i+1})$ computed by the portable device on the basis of the value of the cryptogram $(C_i)$ contained in the first information sequence and stored in the portable device;

transmitting the second information sequence to the server via the terminal;

causing the server to execute the algorithm $(A_2)$ so as to compute the cryptogram $(Q_1)$ on the basis of the value of the cryptogram $(Q_0)$ stored in the server;

causing the access request to be validated by the server only if the values of the two cryptograms $(C_{i+1})$ and $(Q_1)$ are equal; and

giving a new value to the cryptogram $(Q_0)$ stored in the server, which new value is equal to the value of the cryptogram $(C_{i+1})$.

**4.** A method according to any preceding claim, **characterized in that** it consists in causing each portable device to compute and store a new cryptogram $(C_{i+1})$ when it transmits an information sequence containing the previously computed cryptogram $(C_i)$.

**5.** A method according to any preceding claim, **characterized in that** each portable device is initialized by an authorized person prior to delivering the portable device to a user, and **in that**, the initialization operation consists in causing at least the following items of information to be stored in the portable device:

an identity number $(N_c)$ allocated to the portable device;

confidential data $(G_c)$ allocated to the portable device; and

the value of an initial cryptogram $(C_0)$ to enable the processing circuits of the portable device to be able then to compute the successive cryptograms $(C_1, C_2, ...)$.

**6.** A method according to claim 5, **characterized in that** the server is initialized by an authorized person prior to delivering a portable device to a user, and **in that** the initialization operation consists in causing the server to store at least the following items of information for each portable device:

the identity number $(N_c)$ allocated to the portable device;

the secret key $(K_s)$ enabling the server to be able then to compute the value of the confidential data $(G_c)$ that has been allocated to the portable device; and

a cryptogram $(Q_0)$ whose value is equal to the value of the initial cryptogram ($C_0$), the value of said initial cryptogram being arbitrary and, for example, being equal to zero.

7. A method according to claim 5, **characterized in that** the server is partially initialized prior to delivering the portable device to the user, the partial initialization operation consisting in:

causing an authorized person to store the following in the server prior to delivering a batch of portable devices to users: at least the identity numbers ($N_c$) allocated to the portable devices and the secret key ($K_s$) associated with the batch of portable devices to enable the server then to compute the value of the confidential data ($G_c$) that has been allocated to each portable device; and
**in that** the server initialization operation is completed when the user requests access to the server for the first time from a portable device, the completion of the initialization consisting in:

causing the portable device to transmit a first information sequence containing at least the identity number ($N_c$) allocated to the portable device and the initial cryptogram ($C_0$) stored in the portable device;
transmitting the first information sequence to the server via a terminal;
verifying that the identity number ($N_c$) corresponds to a number allocated to the batch of portable devices;
associating, in the server, this received identity number ($N_c$) with a cryptogram $Q_0$ whose value is equal to the value of the cryptogram ($C_0$);
causing the portable device to transmit a second information sequence containing at least the identity number ($N_c$) allocated to the portable device and the cryptogram ($C_1$) stored in the portable device;
transmitting the second information sequence to the server via the terminal;
causing the server to execute the algorithm ($A_1$) so as to compute the value of the confidential data ($G_c$) allocated to the portable device;
causing the server to execute the algorithm (A2) so as to compute the value of the cryptogram ($Q_1$) computed on the basis of the value of the cryptogram ($Q_0$) associated with the identity number ($N_c$) of the portable device, and on the basis of the confidential data ($G_c$);
verifying that the value of the cryptogram ($Q_1$) computed by the server is indeed equal to the value of the cryptogram ($C_1$)

transmitted by the portable device;
giving a new value to the cryptogram ($Q_0$) associated with the identity number ($N_c$) stored in the server, which new value is equal to the value of the cryptogram ($C_1$) so as to finish initializing the server; and
causing the server to validate the access request only if at least the server initialization operation has been successfully finished.

8. A method according to claim 7, **characterized in that** it consists in diversifying the value of the cryptogram ($C_0$) on the basis of base data, and on the basis of the algorithm (A1) having a secret key ($K_m$) different from the secret key ($K_s$), the base data being, for example, the identity number ($N_c$) allocated to the portable device.

9. A method according to claim 5, **characterized in that**, during the initialization of the portable device, the method consists in giving the initial cryptogram ($C_0$) the value of the confidential data ($G_c$) allocated to the portable device.

10. A method according to claim 9, **characterized in that** the server is initialized by an authorized person prior to delivering a portable device to a user, and **in that** this initialization operation consists in:

causing the portable device to transmit an identity sequence containing at least the identity number allocated to the portable device, and the initial cryptogram ($C_0$);
transmitting this initialization sequence to the server via a terminal;
storing in the server the identity number ($N_c$) allocated to the portable device;
associating the identity number ($N_c$) with a cryptogram ($Q_0$) whose value is equal to the value of the initial cryptogram ($C_0$) and with confidential data ($G_c$) whose value is equal to the value of the cryptogram ($C_0$);
causing the portable device to transmit a second identity sequence containing at least the identity number ($N_c$) allocated to the portable device and the cryptogram ($C_1$) stored in the portable device;
transmitting the second identity sequence to the server via the terminal;
causing the server to execute the algorithm (A2) so as to compute the value of the cryptogram ($Q_1$) on the basis of the value of the cryptogram ($Q_0$) associated with the identity number ($N_c$) of the portable device and on the basis of the confidential data ($G_c$);
verifying that the value of the cryptogram ($Q_1$) computed by the server is indeed equal to the value of the cryptogram ($C_1$) transmitted by the portable device;

giving a new value to the cryptogram ($Q_0$) associated with the identity number stored in the server, which new value is equal to the value of the cryptogram ($C_1$) so as to finish initializing the server; and

causing the server to validate the access request only if at least the server initialization operation has been successfully finished.